# EUROPEAN PATENT APPLICATION

(11) **EP 4 029 731 A1**
(43) Date of publication of application: **20.07.2022**
(21) Application number: 21180562.7
(22) Date of filing: 21.06.2021
(51) Int. Cl.: B60N 2/90, B60N 2/02

(54) **MECHANISM FOR MASSAGE SEAT AND SEAT INCLUDING SUCH MECHANISM**

(30) Priority: 13.01.2021 IT 202100000464
(71) Applicant: Itamia Engineering S.r.l., 30015 Chioggia (VE) (IT)
(72) Inventor: UCCELLA, Arnaldo, 30010 Campolongo Maggiore (VE) (IT); PONTINI, Giancarlo, 31031 Caerano di San Marco (TV) (IT)
(74) Representative: Conversano, Gabriele

(57) **Abstract**

Seat (6) provided with a support frame, a stuffing and an upholstery, and comprising further an opening (7) in said upholstery at the resting area of one's back, to allow the access to a recess positioned in the volume of the back of said seat inside which a massaging system is housed, comprising at least a shaft (1), configured to rotate around itself and provided with a plurality of cams (3) and characterized in that said cams (3) are provided each with a circular hole (31), through which they are hinged to said shaft (1), each one of said cams (3) being also elastically fastened to said shaft (1) by means of a torsion spring (2).

## Description

The present invention relates to the technical field of massaging systems used on seat backs in automotive field, transportation and urban mobility, and in civil field.

In particular, the present invention relates to a seat (6) for a motor vehicle comprising a support frame, a stuffing and an upholstery, and comprising further an opening (7) in the upholstery and stuffing at the resting area of one's back, said opening being configured to allow the access from outside to a recess positioned in the volume of the back of said seat inside which a massaging system is housed, comprising at least a shaft (1), configured to rotate around itself and provided with a plurality of cams (3) and characterized in that said cams (3) are provided each with a circular hole (31), through which they are hinged to said shaft (1), each one of said cams (3) being also elastically fastened to said shaft (1) by means of a torsion spring (2).

The technical problem arises since it is desired to develop a massaging device in which the massaging cams, during their massaging action, remain constantly at the minimum distance from the user back (while being preferably constantly in contact with the same), in order to maximize the massaging therapeutical effects.

The device according to the invention comprises a seat (6), provided with a support frame, a stuffing and an upholstery.

The seat (6) comprises also an opening (7) obtained in the upholstery at the resting area of the back, which allows to access to a recess positioned in the volume of the back, inside which the massaging system according to the invention is housed.

For recess it is intended a portion of the volume of the seat stuffing, in which there is no stuffing material (typically made up of sponge or polyurethane), so that the massaging system moving mechanism can be housed therein.

The massaging system according to the invention comprises at last a shaft (1) provided with a plurality of cams (3), preferably in jade stones. Preferably, the device comprises a plurality of shafts (1) which, in a preferred embodiment are arranged parallel to each other and with horizontal axis along the front surface of said opening (7), so that the back of the user while seating on the seat is in contact with the cams (3) mounted on said shafts.

The device is characterized in that said cams (3) are provided each with a circular hole (31), through which they are hinged to said shaft (1). And in that, each one of said cams (3) is elastically fastened to said shaft (1) by means of a torsion spring (2).

The cams are configured so that, when at rest, the cam eccentric areas belonging to the same shaft are arranged offset angularly, preferably but not limitingly offset regularly.

For example, if on a shaft (1) three cams are provided, the same are arranged with their own eccentric areas offset of an angle of 120°.

It is to be specified that the term "at rest" indicates the condition in which the torsion springs fastening each cam do not exert any elastic strength, or, similarly, the condition in which said springs are in their undeformed condition. Preferably, each torsion spring (2) is connected to each one of said cams (3) by introducing the two ends of each spring (2) in a first hole (5) obtained on the shaft (1) and in a second hole (4) obtained in the cam (3), respectively.

The device comprises also actuating means (9) of said shafts and respective control means (10).

For example, the control means can comprise a button (10) positioned in suitable position on the upholstery of said seat (6) and configured to activate or disactivate an electric motor (9), configured to put said at least one shaft (1) in rotation.

Transmission means of type known at the state of the art are arranged between the electric motor (9) and said shafts, such for example an elastic belt or a chain, and respective pulleys or pinions. During rotation of said shaft (1), each cam (3), which in a preferred embodiment is realized in jade stone, while rotating slides along the back of the user while seating on said seat (6).

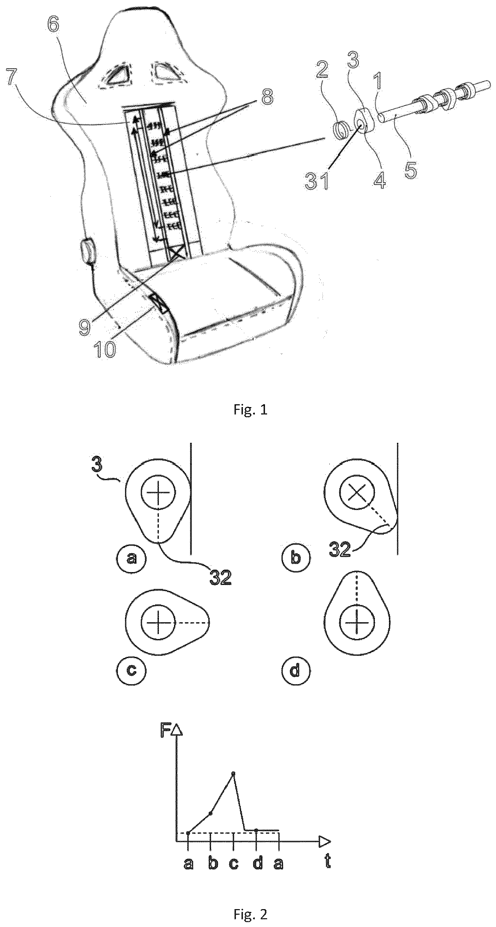

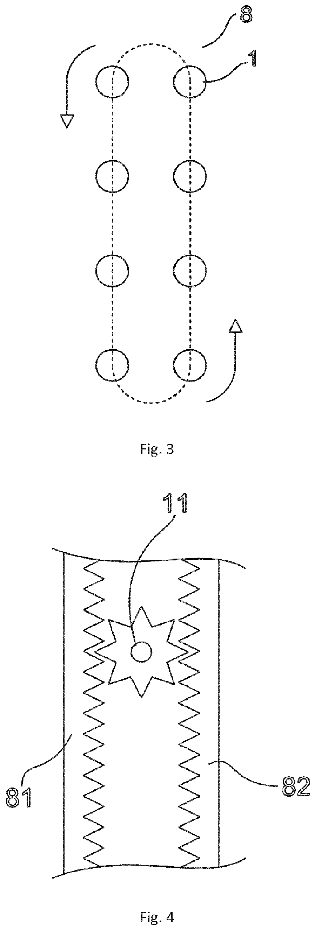

Figures 2a) to e) show four positions the cam (3) takes progressively, while figure 4-e) shows the strength exerted by the cam on the back, at each position.

In position (a), with the spring undeformed, the strength (F) exchanged between back and cam is low, due only to the fact that the back is resting on the same cam.

By passing from position a) to position b) the strength exerted by the cam increases. The back resists, and so the cam stops its own rotation while the shaft (1) keeps rotating. The torsion spring is deformed progressively, by increasing the strength exerted by the cam, up to when such strength is sufficient to make the cam pass over the position c) and so, under the effect of the elastic strength, to come back to position a), for a new cycle.

In this way, it is obtained a constant contact between cam (3) and back over time, with a cyclically applied variable strength.

Moreover, preferably, the seat (6) comprises a couple of guides (8) along which said at least one shaft (1) can slide.

Preferably, said guides are vertical and allow said shaft to cover a closed path, which goes bottom-up in the front portion of the back. A schematic view of the profile of said closed path is shown in figure 3.

The shafts (1) rotate around themselves while sliding along the guide paths. Without this being limiting to the aims of the invention, each guide (8) can comprise, as it is shown in figure 4, two toothed belts (81, 82) opposite to each other, a gear wheel (11) being positioned therebetween, which is keyed on the shaft (1) and engages both the toothed belts.

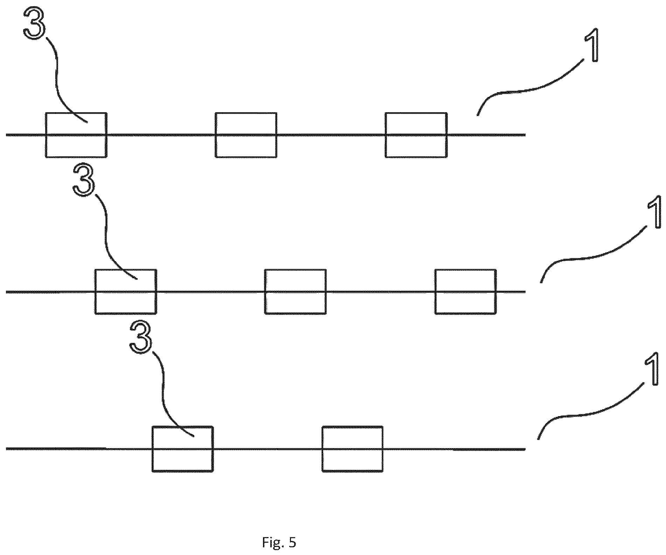

The movement of a toothed belt (81) with respect to the other one (82) causes a rotation and a contemporary translation of the shaft (1). In this way, to the just described movement of the cams it is added a translation movement along the back. Obviously other kinematisms are possible to realize a roto-translational movement of the shaft (1). Moreover, preferably, the device according to the invention comprises a plurality of shafts (1), characterized in that each comprises a plurality of cams (3) and in that said cams (3) are arranged offset axially between the various shafts so to cover, as a whole with their thickness, the whole width of the area object of the massage, as it is shown in figure 5 schematically.

## Claims

1. Seat (6) for a motor vehicle comprising a support frame forming a seat and a back, a stuffing and an upholstery, and comprising further an opening (7) in said upholstery and said stuffing at said back, said opening being configured to allow the access from a recess positioned in the volume of the back, inside which a massaging system is housed, comprising at least a shaft (1), configured to rotate around itself and provided with a plurality of cams (3)
and **characterized in that** said cams (3) are provided each with a circular hole (31), inside which said shaft (1) is introduced, each one of said cams (3) being also elastically fastened to said shaft (1) by means of a torsion spring (2).

2. Seat according to claim 1, **characterized in that** said cams (3) are in jade stones.

3. Seat according to claim 1 or 2, comprising a plurality of shafts (1) with horizontal axis along the front surface of said opening (7), so that the back of the user while seating on the seat is in contact with said shafts.

4. Seat according to any one of the preceding claims, **characterized in that** said cams are configured so that, when at rest, the cam eccentric areas belonging to the same shaft are arranged offset angularly.

5. Seat according to any one of the preceding claims, **characterized in that** each torsion spring (2) is connected to the respective cam (3) by introducing the two ends of each spring (2) in a first hole (5) obtained on the shaft (1) and in a second hole (4) obtained in the cam (3), respectively.

6. Seat according to any one of the preceding claims, comprising further actuating means (9) of said shafts and respective control means (10).

7. Seat according to any one of the preceding claims, **characterized in that** said control means can comprise a button (10) positioned in suitable position on the upholstery of said seat (6) and configured to activate or disactivate an electric motor (9), configured to put said at least one shaft (1) in rotation.

8. Seat according to any one of the preceding claims, comprising further a couple of vertical guides (8) along which said at least one shaft (1) can slide.

9. Seat according to claim 8, comprising further a plurality of shafts (1), each one provided with a plurality of cams (3) and **characterized in that** said cams (3) are arranged offset axially between the various shafts so to cover, as a whole with their thickness, the whole width of the area object of the massage
